# FASCICULE DE BREVET EUROPEEN

(11) **EP 1 055 581 B1**
(45) Date de publication et mention de la délivrance du brevet: **31.08.2005**
(21) Numéro de dépôt: 00430022.4
(22) Date de dépôt: 19.05.2000
(51) Int. Cl.: B62B 3/02, B62B 3/10

(54) **Chariot pliable pour matériel de nettoyage.**
Zusammenfaltbarer Handwagen für Reinigungsgegenstände
Foldable trolley for cleaning articles

(30) Priorité: 27.05.1999 FR 9906910
(43) Date de publication de la demande: 29.11.2000
(73) Titulaire: Alastra, Francette, 13005 Marseille (FR)
(72) Inventeur: Alastra, Francette, 13005 Marseille (FR)
(74) Mandataire: Roman, Michel

(56) Documents cités:
- GB-A- 182 631
- US-A- 2 196 914
- US-A- 2 234 358
- US-A- 2 429 034

## Description

La présente invention a pour objet un chariot pliable pour matériel de nettoyage.

Il concerne le domaine industriel et commercial de la fabrication et de la diffusion d'accessoires de nettoiement destinés aussi bien aux particuliers qu'aux entreprises.

La ménagère qui entreprend le nettoyage des différentes pièces de son appartement, comme l'agent de nettoiement appelé aux mêmes tâches dans les locaux à usage commercial ou industriel, a besoin de rassembler et d'avoir en permanence à sa portée, aux différents endroits où il est appelé à intervenir, des moyens, des ustensiles et des produits. Il s'agit généralement d'un seau plein d'eau, d'une cuvette, d'un balai et d'une pelle, d'un frottoir, d'une tête de loup, de serpillières, torchons, pièces à frotter, et de différents produits de nettoyage. La personne effectuant le nettoyage doit déplacer ces différents éléments au fur et à mesure de sa progression pour les avoir à sa portée de la manière la moins fatigante possible.

L'objet de l'invention est précisément de permettre à la ménagère ou l'agent de nettoiement de rassembler tous les moyens nécessaires à sa tâche sur un support roulant judicieusement agencé pour les recevoir, les déplacer et les utiliser.

Il existe de nombreux types de chariots pliables tels que celui faisant l'objet du brevet N° US 2 429 034 (SMITH AND WILLIAM) qui décrit un chariot de ce type destiné au transport de paniers dans les magasins ou les self-services.

Toutefois les dispositifs connus de ce genre ne sont pas utilisables pour le déplacement de matériel de nettoyage et en particuliers de balais. En outre, ils comportent généralement des articulations relativement complexes risquant d'augmenter les coûts de fabrication et de montage.

Le chariot pliable selon la présente invention a pour objectif de remédier à cet état de choses. Son coût de fabrication est peu élevé, il demeure stable durant le repliage et son encombrement en position de rangement est très réduit.

Il est defini dans la revendication 1 et est constitué de deux plateaux superposés et d'un cerceau supérieur destiné à maintenir un seau de lavage, tous trois articulés sur quatre montants comportant chacun une roulette orientable à leur base et solidarisés deux par deux grâce à deux pivots permettant, soit de les ouvrir en X en position de travail, soit de les rendre parallèles en position de rangement, les deux plateaux et le cerceau étant relevés dans ce cas façon à se trouver sensiblement dans le même plan que les montants de manière à ce que l'ensemble occupe un volume minimum.

Sur les dessins annexés, donnés à titre d'exemple non limitatif d'une des formes de réalisation de l'objet de l'invention:
les figures 1 et 2 représentent le chariot en position de travail, vu respectivement de côté et de l'avant,
les figures 3, 4 et 5 montrent respectivement, vus de dessus et de côté, le cerceau supérieur, le plateau intermédiaire et le plateau inférieur,
la figure 6 représente le chariot partiellement replié
et les figures 7 et 8 le montrent complètement replié pour rangement, vu respectivement de côté et de l'avant,
la figure 9 est une vue de côté montrant une variante du chariot partiellement replié avec cerceau supérieur se rabattant vers le bas,
la figure 10 représente, vu de dessous, le plateau inférieur équipé d'un guide de relevage
et les figures 11 et 12 montrent respectivement en élévation et en plan un chariot équipé d'un panier amovible.

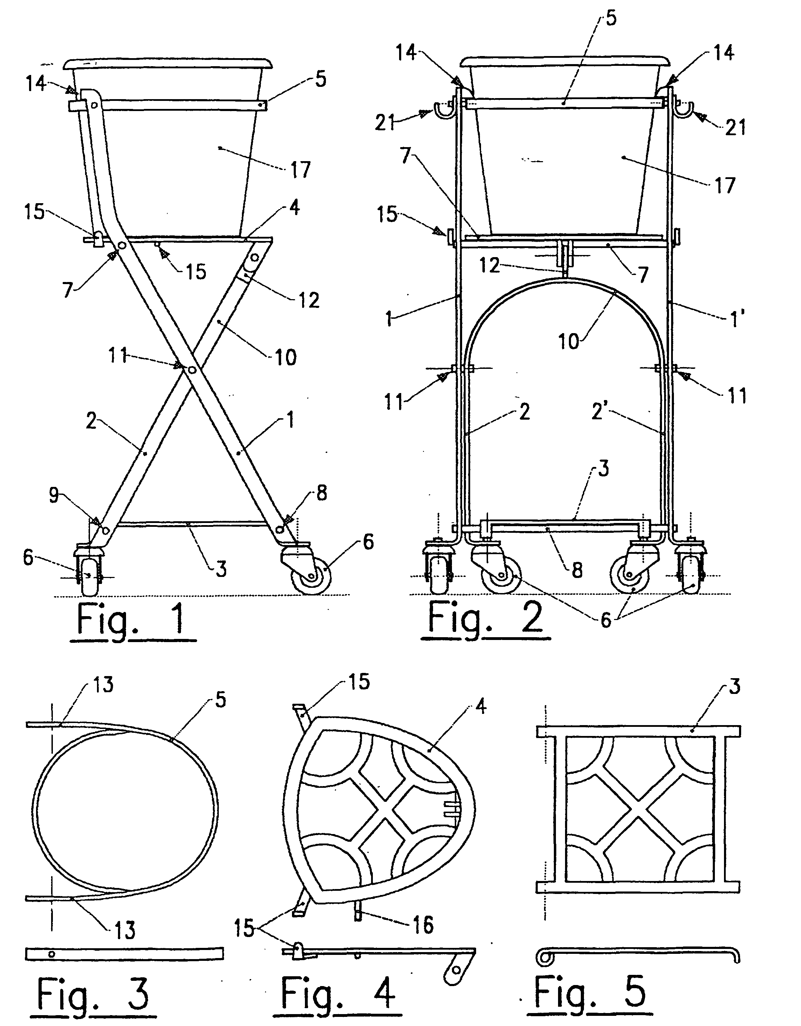

Le dispositif, figures 1 à 8, est constitué d'un châssis support formé d'une paire de montants longs 1 et d'une paire de montants courts 2, 2' portant un plateau inférieur 3, un plateau intermédiaire 4 et un cerceau supérieur 5.

Chacun des quatre montants 1, 1', 2, 2' est équipé à sa base d'une roulette 6 auto-orientable.

Les deux montants longs 1,1' sont reliés par une tige supérieure 7 et une tige inférieure 8 formant entretoises, de manière à constituer un cadre rigide. De même les deux montants courts sont solidarisés par deux entretoises consistant en une tige basse 9 et un arceau 10 reliant leurs extrémités supérieures pour former un second cadre rigide.

Ces entretoises sont déterminées pour que les montants courts 2, 2' soient légèrement moins écartés que les montants longs 1, 1'. Le cadre formé par les montants courts est disposé entre les montants longs, et ces deux ensembles sont reliés par deux pivots 11 situés entre le plateau intermédiaire 4 et le plateau inférieur 3, de façon à ce que les deux montants situés d'un même côté du chariot puissent former un X en position de travail, ou être parallèles en position de rangement.

Les deux plateaux 3 et 4, ainsi que le cerceau 5 sont montés de manière à pivoter autour d'axes horizontaux parallèles aux tiges entretoises pour pouvoir être relevés en position repliée de rangement.

Le plateau inférieur 3 est articulé à sa partie arrière sur la tige basse 9 reliant les montants courts 2, 2', sa partie avant reposant, en position de travail, sur la tige inférieure 8 des montants longs.

L'avant du plateau intermédiaire est articulé sur une patte 12 fixée au milieu de la partie supérieure de l'arceau 10 reliant les montants courts 2, 2', l'arrière reposant sur la tige supérieure des montants longs.

Le cerceau supérieur 5 comporte deux bras 13 latéraux se dirigeant vers l'arrière dont les extrémités libres sont articulés par des pivots à l'extrémité supérieure des montants longs 1, 1'. Ceux-ci comportent chacun un ergots 14 agissant sur l'extrémité des bras 13 pour maintenir le cerceau 5 en position horizontale lorsque le dispositif est déployé.

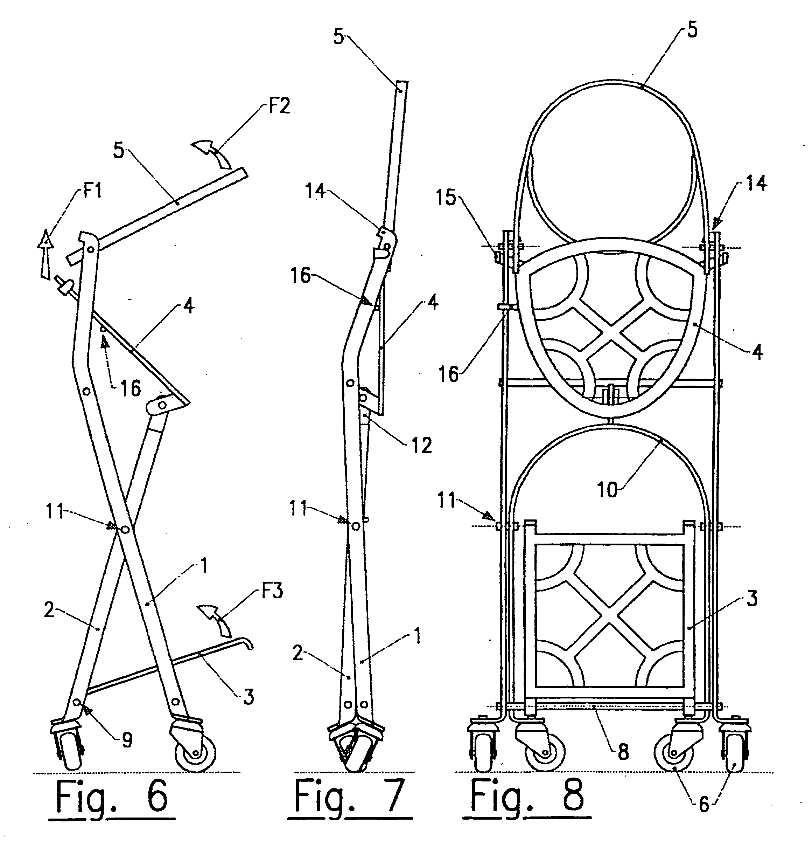

Pour plier le chariot, il suffit de tirer l'arrière du plateau intermédiaire 4 vers le haut (flèche F1, figure 6). Des butées arrières 15 solidaires de ce plateau et passant derrière les montants longs 1,1' forcent ces derniers à pivoter autour des pivots 11, ce qui entraîne la fermeture des deux X formés par le montants. Une butée avant 16 fixée sur le côté du plateau intermédiaire limite l'amplitude du pivotement. Une fois les montants sensiblement parallèles (figure 7), il suffit de relever le cerceau 5 et le plateau inférieur 3 suivant les flèches F2 et F3 (figure 6) pour que le chariot se trouve en position de rangement et que son encombrement soit réduit au minimum.

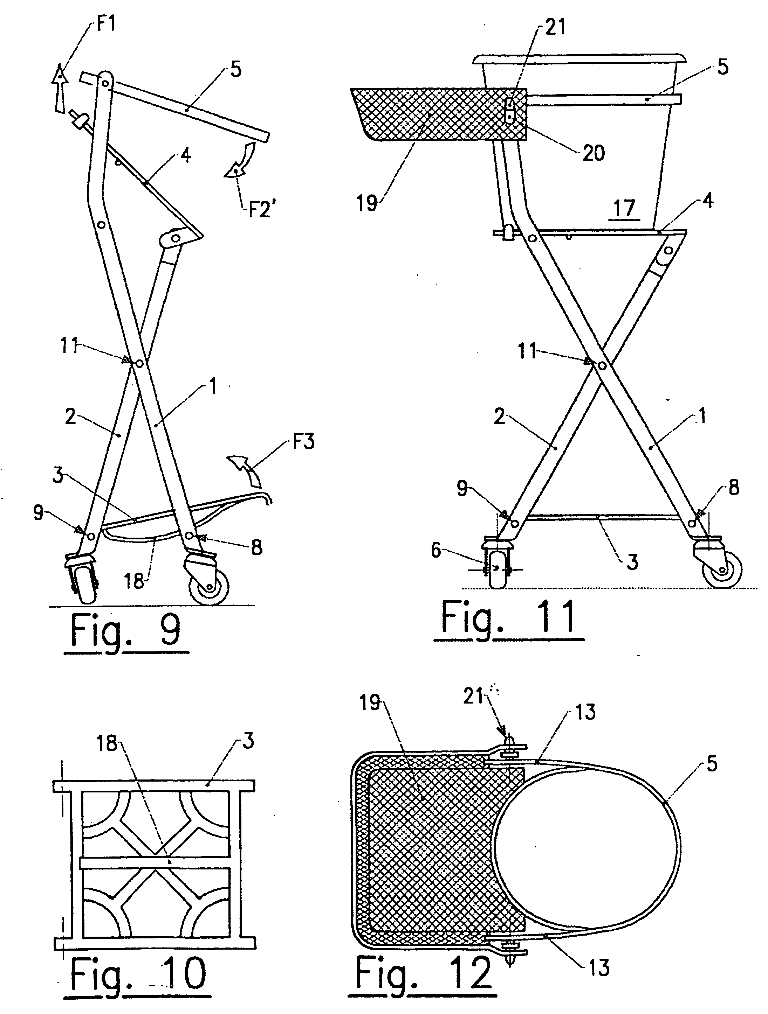

Selon une variante d'exécution, les ergots 14 sont supprimés de façon à permettre de rabattre le cerceau 5 vers le bas afin de diminuer son encombrement en hauteur lorsque le chariot est en position de rangement. Les pivots d'articulation du cerceau seront réalisés de façon à exercer un frottement suffisant entre les pièces articulées pour que le cerceau se maintienne dans la position dans laquelle on le place, tout en pouvant être replié aisément (figure 9).

Pour éviter, lors du repliement du chariot, un blocage du plateau inférieur 3, on pourra disposer sous ce dernier un guide cintré 18 déterminé de façon à ce que la tige inférieure 8 assure automatiquement son relèvement en glissant sur lui (figures 9 et 10).

Le chariot pourra être équipé d'un panier 19 amovible comportant deux perforations 20 latérales permettant de le monter sur deux crochets 21 prévus à cet effet à la partie supérieure des montants longs 1. Ce panier, réalisé en matière synthétique ou en métal, est destiné à recevoir les accessoires ou produits utilisés durant le nettoyage, qui pourront ainsi être utilisés sans avoir à se baisser (figures 11 et 12).

La dimension du cerceau 5 et la distance le séparant du plateau intermédiaire 4 sont déterminées pour recevoir de façon stable un seau à eau 17 de type courant (figures 1 et 2). Le cerceau pourra avantageusement comporter des anneaux ou des crochets latéraux destinés à recevoir des chiffons, des brosses, des balais, des pelles à poussière ou d'autres ustensiles de nettoyage.

Les montants, le cerceau 5 et les deux plateaux 3, 4 seront avantageusement réalisés entièrement en fer plat soudé. Les deux montants courts 2, 2' pourront être faits d'un seul élément plié de façon à former l'arceau 10 entre eux.

On peut également envisager de réaliser les deux plateaux 3, 4, ainsi qu'éventuellement le cerceau 5, et même les montants (1, 1', 2, 2') en matière synthétique, les plateau étant de préférence dans ce cas fabriqués chacun en une pièce moulée par injection.

Le positionnement des divers éléments constitutifs donne à l'objet de l'invention un maximum d'effets utiles qui n'avaient pas été, à ce jour, obtenus par des dispositifs similaires.

## Revendications

1. Chariot pliable pour matériel de nettoyage, destiné aussi bien aux particuliers qu'aux entreprises ayant pour objet de permettre à la ménagère ou l'agent de nettoiement de rassembler tous les moyens nécessaires à leur tavail pour les déplacer et les utiliser, comportant un plateau inférieur (3), un plateau intermédiaire (4) superposé et un cerceau (5) supérieur apte à maintenir un seau de lavage (17), tous trois articulés de manière à pouvoir être relevés en position repliée de rangement,
les deux plateaux (3, 4) et le cerceau (5) étant articulés sur deux montants longs (1, 1') et deux montants courts (2, 2') comportant chacun une roulette (6) auto-orientable à leur base et solidarisés deux par deux grâce à deux pivots (11) permettant, soit de les ouvrir en "X" en position de travail, soit de les rendre parallèles en position de rangement, lesdits deux plateaux et ledit cerceau étant agencés de façon à se trouver, dans cette position, sensiblement dans le même plan que lesdits montants de manière à ce que l'ensemble occupe un volume très réduit.

2. Chariot pliable selon la revendication 1, **se caractérisant par le fait que** les deux montants longs (1, 1') sont reliés par une tige supérieure (7) et une tige inférieure (8) formant entretoises de manière à constituer un premier cadre rigide et que les deux montants courts (2, 2') sont solidarisés par une tige basse (9) et un arceau (10) reliant leurs extrémités supérieures pour former un second cadre rigide, l'ensemble étant agencé de manière à ce que les montants courts (2, 2') soient légèrement moins écartés que les montants longs (1, 1') de façon à ce que le cadre formé par lesdits montants courts puisse être disposé entre lesdits montants longs.

3. Chariot pliable selon la revendication 2, **se caractérisant par le fait que** les deux montants courts (2, 2') sont formés d'un seul élément plié de façon à former l'arceau (10) entre eux.

4. Chariot pliable selon l'une quelconque des revendications précédentes, **se caractérisant par le fait que** le cerceau (5) est agencé pour pouvoir être rabattu vers le bas lorsque le chariot est en position de rangement, les pivots d'articulation dudit cerceau étant réalisés de façon à exercer un frottement suffisant entre les pièces articulées pour que le cerceau se maintienne dans la position dans laquelle on le place, tout en pouvant être replié aisément.

5. Chariot pliable selon l'une quelconque des revendications précédentes, **se caractérisant par le fait que** le cerceau (5) comporte deux bras latéraux (13) dirigés vers l'arrière et dont les extrémités libres sont articulés à l'extrémité supérieure des montants longs (1, 1') qui comportent chacune un ergots (14) agissant sur l'extrémité desdits bras pour maintenir le cerceau (5) en position horizontale lorsque le dispositif est déployé en position de travail.

6. Chariot pliable selon l'une quelconque des revendications précédentes, **se caractérisant par le fait que** le plateau intermédiaire (4) est articulé sur une patte (12) fixée au milieu de la partie supérieure de l'arceau (10) reliant les deux montants courts (2, 2'), et repose, en position de travail, sur la tige supérieure (7) des montants longs (1, 1').

7. Chariot pliable selon l'une quelconque des revendications précédentes, **se caractérisant par le fait que** le plateau inférieur (3) est articulé sur la tige basse (9) reliant les montants courts 2, 2' et repose, en position de travail, sur la tige inférieure (8) des montants longs (1, 1').

8. Chariot pliable selon la revendication 2, **se caractérisant par le fait que** sous le plateau inférieur (3) est disposé un guide cintré (18) déterminé de façon à ce que la tige inférieure (8) assure automatiquement son relèvement en glissant sur lui.

9. Chariot pliable selon l'une quelconque des revendications précédentes, **se caractérisant par le fait que** le plateau intermédiaire (4) est équipé de butées arrières (15) agencées pour passer derrière les montants longs (1, 1') de manière à forcer ces derniers à pivoter autour des pivots (11) lors du repliage du chariot en position de rangement, une butée avant (16) fixée sur un côté dudit plateau intermédiaire limitant l'amplitude du pivotement.

10. Chariot pliable selon l'une quelconque des revendications précédentes, **se caractérisant par le fait que** les montantes (1, 1', 2, 2'), le cerceau (5) et les deux plateaux (3, 4) sont réalisés entièrement en fer plat soudé.

11. Chariot pliable selon l'une quelconque des revendications 1 à 9, **se caractérisant par le fait que** les deux plateaux (3, 4), et éventuellement le cerceau (5) et les montants (1, 1', 2, 2') sont réalisés en matière synthétique.

12. Chariot pliable selon l'une quelconque des revendications précédentes, **se caractérisant par le fait que** le cerceau (5) comporte des anneaux ou des crochets latéraux destinés à recevoir des ustensiles de nettoyage tels que chiffons, brosses, balais et pelles à poussière.

13. Chariot pliable selon l'une quelconque des revendications précédentes, **se caractérisant par le fait qu'**il est équipé d'un panier (19) amovible en matière synthétique ou en métal comportant deux perforations (20) latérales permettant de le monter sur deux crochets (21) prévus à cet effet à la partie supérieure des montants longs (1).

## Patentansprüche

1. Der Klappwagen für Reinigungsmittel ist für Privatpersonen ebenso wie für Unternehmen geeignet. Seine Aufgabe ist es, der Hausfrau oder der Reinigungsfachkraft zu ermöglichen alle für ihre Arbeit notwendigen Mittel zusammenzufassen, um sie transportieren und nutzen zu können. Er enthält eine untere Platte (3), eine mittlere überlagerte Platte (4) und eine obere Schwungfeder (5), die dazu geeignet ist einen Wischeimer (17) zu halten. Diese drei sind so gegliedert, dass sie in eine zusammengeklappte Verstauposition hochgezogen werden können. Der Klappwagen für Reinigungsmittel ist **dadurch gekennzeichnet, dass** die beiden Ablageflächen (3, 4) und die Schwungfeder (5) durch zwei lange Ständer (1, 1') und zwei kurze Ständer (2, 2') verbunden sind, welche beide jeweils eine freibewegliche Rolle an ihrer Unterseite besitzen, die wiederum ihrerseits durch einen Drehzapfen miteinander verbunden sind. Dieser sorgt dafür, dass die Ständer entweder als "X" in die Arbeitsposition geöffnet werden können oder parallel in die Verstauposition geschlossen werden können. Die besagten zwei Platten und die besagte Schwungfeder sind so angeordnet, dass sie sich in dieser Position genau auf der gleichen Ebene befinden, wie die besagten Ständer, so dass insgesamt äußerst wenig Platz beansprucht wird.

2. Der Klappwagen ist nach Forderung 1 **dadurch gekennzeichnet, dass** die beiden langen Ständer (1, 1') durch eine obere Stange (7) und eine untere Stange (8) verbunden sind, die einen Stützapparat bilden, und so einen ersten stabilen Rahmen schaffen. Weiterhin ist der Klappwagen **dadurch gekennzeichnet, dass** die zwei kurzen Ständer (2, 2') durch eine tiefe Stange und einen kleinen Bogen (10) miteinander verbunden sind, welche wiederum ihre oberen Endstücke miteinander verbinden, um einen zweiten stabilen Rahmen zu schaffen. Das Ganze ist so angeordnet, dass die kurzen Ständer (2, 2') etwas weniger ausgebreitet sind als die langen Ständer (1, 1'), so dass der von den besagten kurzen Ständern geschaffene Rahmen zwischen den besagten langen Ständern aufgestellt werden kann.

3. Der Klappwagen ist nach Forderung 2 **dadurch gekennzeichnet, dass** die beiden kurzen Ständer (2, 2') aus einem einzigen Element bestehen, das so gebogen ist, dass zwischen ihnen der kleine Bogen (10) gebildet wird.

4. Der Klappwagen ist nach einer beliebigen der vorherigen Forderungen **dadurch gekennzeichnet, dass** die Schwungfeder (5) so eingerichtet ist, dass sie heruntergeklappt werden kann, sobald sich der Klappwagen in der Verstauposition befindet. Die Drehzapfen des Gelenks der besagten Schwungfeder wurden so konzipiert, dass sie eine ausreichende Reibung zwischen den zusammengefügten Teilen ausüben können, damit die Schwungfeder in der ihr zugedachten Position bleibt und dennoch bequem zurückgeklappt werden kann.

5. Der Klappwagen ist nach einer beliebigen der Forderungen 1 bis 3 **dadurch gekennzeichnet, dass** die Schwungfeder (5) zwei seitliche Arme (13) besitzt, welche nach hinten ausgerichtet sind und deren freie Endstücke mit dem oberen Endpunkt der langen Ständer (1, 1') verbunden sind. Jeder der langen Ständer besitzt einen Sporn (14), der sich an die Endstücke der besagten Arme bewegt, um die Schwungfeder (5) in horizontaler Position zu halten, sobald der Apparat in Arbeitsposition aufgeklappt wird.

6. Der Klappwagen ist nach einer beliebigen der vorherigen Forderungen **dadurch gekennzeichnet, dass** die mittlere Platte mit einer Lasche (12) verbunden ist, welche in der Mitte des oberen Teils des kleinen Bogens angebracht ist. Sie verbindet die beiden kurzen Ständer (2, 2') und liegt in der Arbeitsposition auf der oberen Stange (7) der langen Ständer (1, 1').

7. Der Klappwagen ist nach einer beliebigen der vorherigen Forderungen **dadurch gekennzeichnet, dass** die untere Platte (3) mit der tiefen Stange (9) verbunden ist, welche die kurzen Ständer (2, 2') miteinander verbindet und welche in der Arbeitsposition auf der unteren Stange (8) der langen Ständer (1, 1') liegt.

8. Der Klappwagen ist nach Forderung 7 **dadurch gekennzeichnet, dass** unter der unteren Fläche (3) eine gebogene Schiene (18) angebracht ist, die dazu dient, dass die untere Stange (8) automatisch die Wiederaufrichtung der Schiene sichert, indem sie sich beim Zusammenklappen des Wagens auf sie schiebt.

9. Der Klappwagen ist nach einer beliebigen der vorherigen Forderungen **dadurch gekennzeichnet, dass** die mittlere Platte (4) mit hinteren Endwinkeln (15) ausgestattet ist. Sie wurden dazu eingerichtet, um hinter die langen Ständer (1, 1') geschoben werden zu können, indem sie letztere beim Zusammenfalten des Wagens in die Verstauposition um die Drehzapfen herum drehen. Eine vorderer Endwinkel (16), der auf einer Seite der besagten mittleren Platte befestigt ist, dient zur Begrenzung der Schwenkamplitude.

10. Der Klappwagen ist nach einer beliebigen der vorherigen Forderungen **dadurch gekennzeichnet, dass** die Ständer (1, 1', 2, 2'), die Schwungfeder (5) und die beiden Flächen (3, 4) komplett aus ebenem gelötetem Eisen hergestellt sind.

11. Der Klappwagen ist nach einer beliebigen der Forderungen 1 bis 7 **dadurch gekennzeichnet, dass** die beiden Flächen (3, 4) und eventuell die Schwungfeder (5) und die Ständer (1, 1', 2, 2') aus synthetischem Material hergestellt sind.

12. Der Klappwagen ist nach einer beliebigen der vorherigen Forderungen **dadurch gekennzeichnet, dass** die Schwungfeder (5) Ringe oder seitliche Haken aufweist, die dazu dienen Reinigungsutensilien wie Putzlappen, Bürsten, Handfeger und Kehrschaufeln aufzunehmen.

13. Der Klappwagen ist nach einer beliebigen der vorherigen Forderungen **dadurch gekennzeichnet, dass** er mit einem abnehmbaren Korb (19) aus synthetischem Material oder Metall ausgestattet ist. Er enthält zwei seitliche Durchlöcherungen, die ihn auf die beiden dafür vorgesehenen Haken (21) auf den oberen Teil der langen Ständer (1) hochziehen.

## Claims

1. Pliable trolley for cleaning material for private individuals and companies which should enable the housewife or the cleaning operative to gather all the tools they need for their job so as to bring them and use them, with a lower tray (3), an intermediate tray (4) above and an upper hoop (5) meant to hold a washing bucket (17). These three elements should be articulated so as to enable someone to fold them up. Indeed, the two trays (3, 4) and the hoop should be articulated on two long uprights (1, 1') and two short uprights (2, 2'). Each upright should have a caster with a rotating base and be linked in two pairs by two pivots (11) enabling either to open them in the shape of an "X" at work, or to make them parallel when you need to put the trolley away; in this position, the trays and the hoop should be arranged so as to be quite on the same level as the uprights in order the whole thing to take very little space.

2. Pliable trolley according to claim number 1 with the following design features - the 2 long uprights (1, 1') is linked to each other by an upper pole (7) and a lower pole (8) making a cross arm which is a first rigid frame and the two short uprights are linked by a low pole (9) and a hoop (10) linking their upper ends and making a second rigid frame, the whole thing is arranged so that the space between the short uprights (2, 2') is slightly less large than the space between the long uprights (1, 1') so that the frame made by the short uprights can be put between the long uprights.

3. Pliable trolley according to claim number 2 with the following design features - the two short uprights (2, 2') are made of one element folded so as to make the hoop (10) between them.

4. Pliable trolley according to any of the former claims with the following design features - the hoop (5) is arranged so that you can put it down when the trolley is away; indeed, the pivots of articulation are made so as to make enough friction between the articulated parts for the hoop to remain in the position in which you put it and to be easily flexible.

5. Pliable trolley according to any of the former claims with the following design features - the hoop (5) has two backward lateral arms (13), the free end of which are articulated to the upper end of the long uprights (1, 1') which all have a lug (14) that acts on the end of the arms to keep the hoop (5) in a horizontal position when the whole thing is unfolded in the working position.

6. Pliable trolley according to any of the former claims with the following design features - the intermediate tray (4) is articulated on a leg (12) stuck in the middle of the upper part of the hoop (10) which links the two short uprights (2, 2'); in the working position, the tray rests on the upper pole (7) of the long uprights (1, 1').

7. Pliable trolley according to any of the former claims with any of the following design features - the lower tray (3) is articulated on the low pole which links the short uprights 2, 2'; in the working position, the lower tray rests on the lower pole (8) of the long uprights (1, 1').

8. Pliable trolley according to claim number 2 with the following design features - under the lower tray (3), there is a an arched guide (18) arranged so that the lower pole (8) takes it up automatically by gliding on it.

9. Pliable trolley according to any of the former claims with the following design features - the intermediate tray (4) has back abutments (15) arranged so as to go behind the long uprights (1, 1') in order to make the uprights revolve around the pivots (11) when you fold the trolley down in order to put it away; indeed, a front abutment (16) is stuck on a side of the intermediate tray to limit the amplitude of the revolving.

10. Pliable trolley according to any of the former claims with the following feature - the uprights (1, 1', 2, 2'), the hoop (5) and the two trays (3, 4) are entirely made of flat welded iron.

11. Pliable trolley according to one of claims 1 to 9 with the following feature - the two trays (3, 4), and possibly the hoop (5) and the uprights (1, 1', 2, 2') are made of synthetic materials.

12. Pliable trolley according to any of the former claims with the following design features - the hoop (5) has lateral rings or hooks meant to carry such cleaning stuff as dusters, brushes, brooms and dust shovels.

13. Pliable trolley according to any of the former claims, fitted with a removable basket (19) made of synthetic material or metal. The basket has a whole on each side; these holes enable the basket to be hung on two hooks (21) which are purposely located on the upper part of the long uprights (1).
